# EUROPÄISCHE PATENTSCHRIFT

(11) **EP 1 152 682 B1**
(45) Veröffentlichungstag und Bekanntmachung des Hinweises auf die Patenterteilung: **23.04.2003**
(21) Anmeldenummer: 00904994.1
(22) Anmeldetag: 31.01.2000
(51) Int. Cl.: A47J 43/08

(54) **KÜCHENMASCHINE MIT EINER MIXERLAGERUNG**
FOOD PROCESSOR WITH MIXER MOUNTING
ROBOT MENAGER AVEC STRUCTURE DE MONTAGE POUR MIXER

(30) Priorität: 19.02.1999 DE 19907052
(43) Veröffentlichungstag der Anmeldung: 14.11.2001
(73) Patentinhaber: BSH Bosch und Siemens Hausgeräte GmbH, 81669 München (DE)
(72) Erfinder: PODGORSEK, Ivan, 3327 Smartno ob Paki (SI); POGACAR, Toni, 331 Sempeter (SI); PFERSCH, Harald, D-83395 Freilassing (DE)
(74) Vertreter: Thoma, Lorenz
(86) Internationale Anmeldenummer: EP0000766
(87) Internationale Veröffentlichungsnummer: WO00048499

(56) Entgegenhaltungen:
- EP-A- 0 078 423
- DE-A- 3 546 506
- DE-B- 2 928 787
- FR-A- 1 292 100

## Beschreibung

Die Erfindung betrifft eine Küchemaschine mit einer Mixereinheit mit einem Mixerbecher, einem Messer, einem Messerlager und einer Kupplung zwischen Messereinheit und einer Antriebseinheit der Küchenmaschine. Derartige gattungsgemäße Küchenmaschinen sind bekannt (siehe zum Beispiel EP-A-78423 wie im Oberbegriff des Anspruchs 1 beschrieben). Zur Messerlagerung wird in der Regel ein Sinterzylinderlager verwendet. Zylinderlager beinhalten aber den Nachteil, daß sie nur eine sehr geringe Verkippung der Antriebsachse gegenüber den Lagerschalen tolerieren. Bei Verwendung von Kunststoffbauteilen treten aber fertigungsbedingt größere Toleranzen auf, die eine Verkippung der Antriebsachse hervorrufen, den eine Sinterzylinderlagerung nicht mehr folgen kann. Es kommt zu einer hohen Gleitreibung und schlimmstenfalls zu einer Verklemmung der Antriebsachse gegenüber den Lagerschalen.

Der Erfindung liegt die Aufgabe zugrunde, eine Lagerung bereitzustellen, die eine durch die Verwendung von Kunststoffteilen und die damit verbundenen Fertigungstoleranzen vorgegebene Verkippung zuläßt.

Diese Aufgabe wird mit einer Küchemaschine mit den Merkmalen des Anspruchs 1 gelöst. Dabei ist das Messerlager als Kalottenlager ausgebildet, das auf kalottenförmig ausgebildeten Laufflächen gleitet. Bei einem Kalottenlager kann die Antriebswelle leicht schräg gestellt sein, ohne daß in der Kalottenlagerung eine Verklemmung stattfindet. Dies bietet den entscheidenden Vorteil, Kunststoff für die Bauteile des Mixerantriebs einzusetzen, da das Kalottenlager gegenüber den Fertigungstoleranzen der Kunststoffteile unempfindlich ist. Als weiterer Vorteil kommt hinzu, daß die Kalotte äußerst ruhig in den Lagerschalen läuft und somit die Kalottenlagerung zu einer Geräuschminimierung der Mixereinheit beiträgt.

In einer vorteilhaften Ausgestaltung der Erfindung ist das Kalottenlager von oben und unten mit einem V-Ring abgedichtet. Dies bietet den Vorzug, daß die gesamte Antriebseinheit des Messers laugenfest ist, d.h. in einer Spülmaschine gereinigt werden kann.

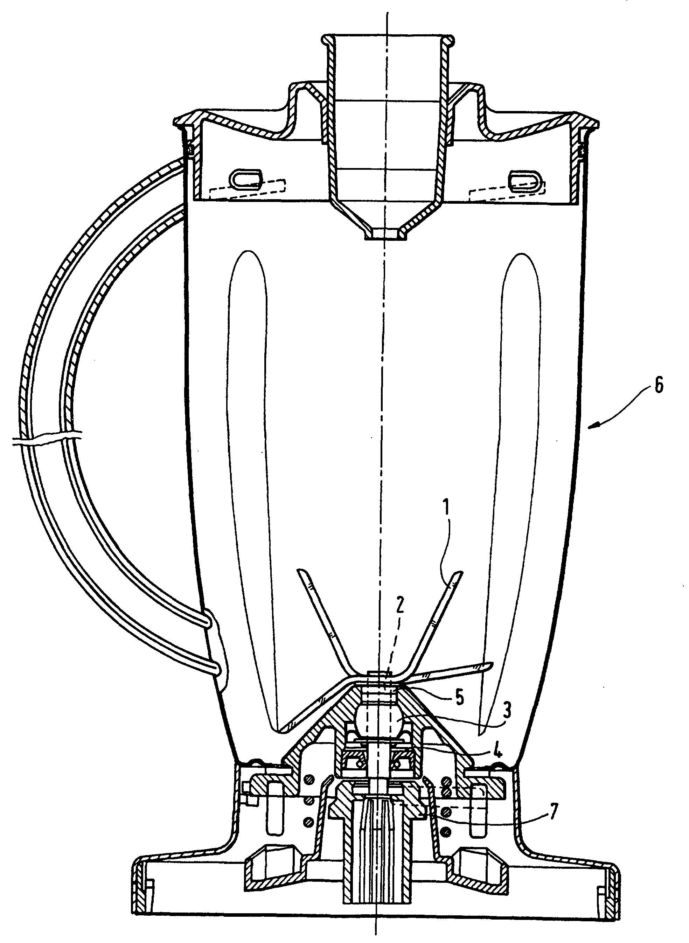

Vorzugsweise dient als Lagerschale eine Klemmbrille. Damit kann ein vergleichsweise einfacher Aufbau der Lagerung realisiert werden. Vorteilhaft weisen die Pratzen der Klemmbrille Kugeltangentialflächen auf, so daß das Lager sehr leichtgängig und geräuscharm in der Klemmbrille gleitet. In einer Figur ist eine Ausgestaltung der Erfindung dargestellt. Die Figur zeigt einen Mixaufsatz für eine Küchenmaschine, bestehend aus einem Mixerbecher, einem Messer, einer Messerlagerung und einer Kupplung zwischen Mixereinheit und Antriebseinheit der Küchenmaschine.

Ein Messer 1 ist mit einer Welle 2 drehfest verbunden. Die Welle 2 wird von einem Kalottenlager 3, das in kalottenförmig ausgebildeten Laufflächen gleitet, gelagert. Die Lagerstelle wird dabei von zwei V-Ringen 4 und 5 gegen Eintreten von Flüssigkeit oder Verschmutzung abgedichtet. Auf diese Weise ist die Lagerstelle laugenfest und damit kann die gesamte Mixerantriebseinheit in einer Spülmaschine gereinigt werden. Die Antriebswelle wird beim Aufsetzen der Mixereinheit auf den Antrieb einer nicht dargestellten Küchenmaschine mittels einer Kupplung 7 trieblich verbunden. Ein leichte Verkippung der Antriebswelle 2 beim Schließen des Antriebsstrangs beeinträchtigt dabei die Funktion und Laufruhe des Kalottenlagers 3 in keiner Weise.

### BEZUGSZEICHENLISTE

- 1: Messer
- 2: Welle
- 3: Kalottenlager
- 4: V-Ring
- 5: V-Ring
- 6: Mixereinheit
- 7: Kupplung

## Patentansprüche

1. Küchenmaschine mit einer Mixereinheit (6) und einem Mixerbecher, einem mit einer Welle (2) verbundenen Messer (1), einem Messerlager zur Lagerung der Welle (2) und einer Kupplung (7) zwischen Mixereinheit (6) und Antriebseinheit der Küchenmaschine, **dadurch gekennzeichnet, daß** das Messerlager als Kalottenlager (3) ausgebildet ist, das auf kalottenförmig ausgebildeten Laufflächen gleitet.

2. Küchenmaschine nach Anspruch 1, **dadurch gekennzeichnet, daß** das Kalottenlager (3) von oben und unten mit jeweils einem V-Ring (4 und 5) abgedichtet ist.

3. Küchenmaschine nach Anspruch 1, **dadurch gekennzeichnet, daß** als Lagerschale eine Klemmbrille eingesetzt ist.

4. Küchenmaschine nach Anspruch 3, **dadurch gekennzeichnet, daß** die Klemmbrille Pratzen beinhaltet, die Kugeltangentialflächen aufweisen.

## Claims

1. Kitchen machine with a mixer unit (6) and a mixer beaker, a knife (1) connected with a shaft (2), a knife bearing for mounting the shaft (2) and a coupling (7) between mixer unit (6) and drive unit of the kitchen machine, **characterised in that** the knife bearing is constructed as a spherical bearing (3) which slides on spherically formed running surfaces.

2. Kitchen machine according to claim 1, **characterised in that** the spherical bearing (3) is sealed from above and below in each instance by a respective V-section ring (4 and 5).

3. Kitchen machine according to claim 1, **characterised in that** a clamp seat is used as bearing shell.

4. Kitchen machine according to claim 3, **characterised in that** the clip seat has claws which have ball tangential surfaces.

## Revendications

1. Robot ménager avec une unité de mixer (6) et un récipient de mixer, avec une lame (1) raccordée à un arbre (2), avec un palier de lame pour le logement de l'arbre (2) et avec un accouplement (7) entre l'unité de mixer (6) et l'unité d'entraînement du robot ménager, **caractérisé en ce que** le palier de lame est formé comme palier en calotte (3) glissant sur des surfaces de roulement en forme de calotte.

2. Robot ménager selon la revendication 1, **caractérisé en ce que** le palier en calotte (3) est rendu étanche par le haut et par le bas à l'aide respectivement d'une bague en V (4 et 5).

3. Robot ménager selon la revendication 1, **caractérisé en ce qu'**une bride de serrage est utilisée comme coussinet de palier.

4. Robot ménager selon la revendication 3, **caractérisé en ce que** la bride de serrage comprend des griffes présentant des surfaces tangentielles sphériques.
